# EUROPÄISCHE PATENTANMELDUNG

(11) **EP 4 718 110 A1**
(43) Veröffentlichungstag der Anmeldung: **01.04.2026**
(21) Anmeldenummer: 25200822.2
(22) Anmeldetag: 08.09.2025
(51) Int. Cl.: G01S 7/48, G01S 17/42, G01S 17/931

(54) **ASSISTENZSYSTEM FÜR EIN FAHRZEUG MIT LIDAR-SENSOR ZUM DETEKTIEREN EINER VERSCHMUTZUNG DES LIDAR-SENSORS**

(30) Priorität: 26.09.2024 DE 102024127913
(71) Anmelder: Linde Material Handling GmbH, 63743 Aschaffenburg (DE)
(72) Erfinder: Pfeffermann, Matthias, 63739 Aschaffenburg (DE)
(74) Vertreter: Patentship Patentanwaltgesellschaft

(57) **Zusammenfassung**

Die Erfindung betrifft ein Assistenzsystem (200) für ein Fahrzeug (110), das mit einem Lidar-Sensor (120) zum Erkennen einer Umgebung (100) des Fahrzeugs ausgestattet ist, wobei das Assistenzsystem folgendes umfasst: einen Empfänger zum Empfang von Nutzdaten (220) des Lidar-Sensors, wobei die Nutzdaten eine Mehrzahl von Lasermessungen (222a, 222b) umfassen, welche einen Abstand (223) des Fahrzeugs zu einem oder mehreren Objekten (130) in der Umgebung des Fahrzeugs anzeigen; und eine Steuerung (230), die ausgebildet ist, für jede Lasermessung zu bestimmen, ob der entsprechende Abstand des Fahrzeugs zu einem Objekt (130) in der Umgebung des Fahrzeugs einen Mindestbereich (224) unterschreitet, und bei Unterschreitung des Mindestbereichs ein zu nahes Hindernis zu detektieren; wobei die Steuerung ausgebildet ist, bei Erkennung einer Mehrzahl von zu nahen Hindernissen in einem zusammenhängenden Umgebungsbereich (311, 312) des Fahrzeugs eine Verschmutzung des Lidar-Sensors zu detektieren (231).

## Beschreibung

Die Erfindung betrifft das Gebiet der Assistenzsysteme für Fahrzeuge und Sensoren solcher Assistenzsysteme. Die Erfindung betrifft ein Assistenzsystem für ein Fahrzeug mit Lidar-Sensor zum Detektieren einer Verschmutzung des Lidar-Sensors. Insbesondere betrifft die Erfindung das automatische Erkennen von Verschmutzungen des Sichtfensters eines Lidar-Sensors.

Fahrerassistenzsysteme nutzen Informationen über das Fahrzeug und dessen Umfeld, um den Fahrer bei der Bedienung des Fahrzeugs zu unterstützen. Diese Informationen erhalten die Systeme von Sensoren, Ultraschall, Radar, Lidar und Kameras. Die gesammelten Informationen müssen dann vom System ausgewertet werden. Daraufhin greift das System entweder selbst ein - beispielsweise in den Antrieb und reguliert Gas oder Bremse oder in die Steuerung - oder das System warnt den Fahrer über Lautsprecher, Displays oder auch Lenkrad, damit dieser selbst eingreifen kann.

Lidar-Sensoren werden vor allem in Assistenzsystemen von Fahrzeugen eingesetzt, um die Umgebung zu erkennen.

Um eine einwandfreie Funktion eines auf einem Lidar-Sensor basierenden Assistenzsystems zu gewährleisten, muss das Sichtfeld des Sensors frei von Verschmutzungen, Beschädigungen, etc. sein. Bisher wird der Sensor nur vom Benutzer (Anwender) durch regelmäßige Sichtprüfung auf Verschmutzungen untersucht. Dies ist je nach Sorgfalt des Benutzers nicht immer gewährleistet, somit können Verschmutzungen allmählich zu einer Verschlechterung des Systemverhaltens führen, ohne dass dies der Benutzer zunächst merkt.

Der vorliegenden Erfindung liegt die Aufgabe zugrunde, eine effiziente Überwachung eines Lidar-Sensors für ein Fahrassistenzsystem zu schaffen, bei der Verschmutzungen automatisch erkannt und dem Benutzer angezeigt werden.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben.

Die erfinderische Lösung basiert auf der Idee, anhand der Nutzdaten des Lidar-Sensors festzustellen, ob das Sichtfeld des Lidar-Sensors signifikant verschmutzt oder verkratzt, beschädigt, etc. ist. Wird eine Verschmutzung vom Assistenzsystem selbst festgestellt, kann dieses den Benutzer über die Verschmutzung informieren, um ihn zu veranlassen, den Sensor zu reinigen und somit eine einwandfreie Funktion des Systems zu gewährleisten.

Ausführungsformen der Erfindung basieren darauf, dass der Lidar-Sensor für jede Lasermessung eine der folgenden Informationen bereitstellen kann: Weil sich das Hindernis zu nah am Sensor befindet, wird 1) die Lasermessung als ungültig klassifiziert; 2) liefert die Lasermessung einen entsprechend kleinen Wert für die Distanz zum Hindernis. Ist eines dieser Kriterien für eine Lasermessung erfüllt, kann davon ausgegangen werden, dass es sich um eine Verschmutzung handeln kann.

Die hier vorgestellte Erkennung einer Verschmutzung des Lidar-Sensors kann in allen Applikationen, die einen solchen Sensor verwenden, eingesetzt werden. Auch ist sie für alle derzeit gängigen Bauformen eines Lidar-Sensors einsetzbar.

Gemäß einem ersten Aspekt der Erfindung wird die oben beschriebene Aufgabe gelöst durch ein Assistenzsystem für ein Fahrzeug, das mit einem Lidar-Sensor zum Erkennen einer Umgebung des Fahrzeugs ausgestattet ist, wobei das Assistenzsystem folgendes umfasst: einen Empfänger zum Empfang von Nutzdaten des Lidar-Sensors, wobei die Nutzdaten eine Mehrzahl von Lasermessungen umfassen, welche einen Abstand des Fahrzeugs zu einem oder mehreren Objekten in der Umgebung des Fahrzeugs anzeigen; und eine Steuerung, die ausgebildet ist, für jede Lasermessung zu bestimmen, ob der entsprechende Abstand des Fahrzeugs zu einem Objekt in der Umgebung des Fahrzeugs einen Mindestbereich unterschreitet, und bei Unterschreitung des Mindestbereichs ein zu nahes Hindernis zu detektieren; wobei die Steuerung ausgebildet ist, bei Erkennung einer Mehrzahl von zu nahen Hindernissen in einem zusammenhängenden Umgebungsbereich des Fahrzeugs eine Verschmutzung des Lidar-Sensors zu detektieren.

Mit einem solchen Assistenzsystem ist eine effiziente Überwachung des Lidar-Sensors des Fahrzeugs möglich, so dass Verschmutzungen automatisch erkannt und dem Benutzer angezeigt werden können. Wird eine Verschmutzung vom Assistenzsystem festgestellt, kann dieses den Benutzer über die Verschmutzung informieren, um ihn zu veranlassen, den Sensor zu reinigen und somit eine einwandfreie Funktion des Systems zu gewährleisten.

Gemäß einer beispielhaften Ausführungsform des Assistenzsystems umfassen die Nutzdaten eine Mehrzahl von Lasermessungen bei verschiedenen Azimut-Winkeln und für jeden Azimut-Winkel eine Mehrzahl von Lasermessungen bei verschiedenen Elevation-Winkeln.

Über die Lasermessungen kann für jeden Punkt des Sichtfensters eine Entfernung zu einem Objekt oder Hindernis in der Umgebung des Fahrzeugs bestimmt werden. Damit kann für das gesamte Sichtfenster festgestellt werden, ob ein Hindernis zu nah am Sichtfenster ist, so dass eine Verschmutzung des Sichtfensters an dieser Stelle erkannt werden kann.

Gemäß einer beispielhaften Ausführungsform des Assistenzsystems umfassen die Nutzdaten für einen Elevation-Winkel, insbesondere einem Winkel entsprechend einer Elevation von 0 Grad, eine Mehrzahl von Lasermessungen bei verschiedenen Azimut-Winkeln.

Dies erlaubt eine effiziente Abtastung des gesamten Sichtfensters des Fahrzeugs mit hoher Auflösung und lässt damit genaue Aussagen über eine eventuell vorhandene Verschmutzung oder Beschädigung oder anderweitige Beeinträchtigung des Sichtfensters zu.

Gemäß einer beispielhaften Ausführungsform des Assistenzsystems umfasst der zusammenhängende Umgebungsbereich des Fahrzeugs ein Feld einer vorgebbaren Anzahl n benachbarter Lasermessungen.

Mit einem solchen zusammenhängenden Umgebungsbereich kann ausgeschlossen werden, dass nur singuläre Beeinträchtigungen des Sichtfensters, welche nur in kleinen Bereichen auftreten, zu einer Erkennung einer Verschmutzung und damit einem Warnhinweis an den Benutzer führen.

Gemäß einer beispielhaften Ausführungsform des Assistenzsystems umfasst das Feld einer vorgebbaren Anzahl n benachbarter Lasermessungen Folgendes: eine vorgebbare Anzahl e von Lasermessungen bei benachbarten Elevation-Winkeln bei einer vorgebbaren Anzahl a von Lasermessungen bei benachbarten Azimut-Winkeln.

Mit diesen Parametern n, e und a kann das Feld von benachbarten Lasermessungen, welches den zusammenhängenden Umgebungsbereich bezeichnet, entsprechend dimensioniert werden. Eine solche Dimensionierung kann vor dem Einsatz des Assistenzsystems erfolgen, beispielsweise anhand von Erfahrungswerten für die Größe des Sichtfensters und die Größe eines sinnvollen zusammenhängenden Umgebungsbereichs. Allerdings ist es auch möglich, das Feld bzw. den zusammenhängenden Umgebungsbereich während des Betriebs des Fahrzeugs entsprechend neuer Vorgaben zu ändern.

Gemäß einer beispielhaften Ausführungsform des Assistenzsystems ist die Steuerung ausgebildet, bei Erkennung einer Mehrzahl von zu nahen Hindernissen in einem zusammenhängenden Umgebungsbereich des Fahrzeugs, welche geringer ist, als die vorgegebene Anzahl n des Felds benachbarter Lasermessungen, eine unkritische Verschmutzung des Lidar-Sensors zu detektieren.

Eine unkritische Verschmutzung muss hier nicht angezeigt werden, da sie noch keine negativen Wirkungen auf den Bediener zeigt. Er kann beispielsweise aufgrund der verbleibenden Lidar-Messungen (Lasermessungen) das Fahrzeug noch ausreichend gut bedienen, ohne dass er in Gefahrensituationen gerät. Alternativ kann eine solche unkritische Verschmutzung aber auch dem Benutzer angezeigt werden, beispielsweise über einen gelben (unkritischen) Warnhinweis.

Gemäß einer beispielhaften Ausführungsform des Assistenzsystems ist die Steuerung ausgebildet, bei Detektion einer Verschmutzung des Lidar-Sensors einen Warnhinweis, dass der Lidar-Sensor verschmutzt ist, anzuzeigen und/oder eine Geschwindigkeitsverringerung des Fahrzeugs zu veranlassen.

Der Warnhinweis soll den Fahrer bzw. Bediener veranlassen, das Sichtfenster des Lidar-Sensors zu überprüfung und von Verschmutzung zu reinigen oder unter Umständen einen Austausch oder eine Reparatur vorzunehmen, um den Lidar-Sensor wieder in einen einwandfreien Zustand zu bringen. Zusätzlich oder alternative können automatische Sicherheitsroutinen durchgeführt werden, wie zum Beispiel Reduktion der Geschwindigkeit, um sicherzustellen, dass das Fahrzeug aufgrund der Verschmutzung des Lidar-Sensors nicht in einen ungewollten Zustand gerät, wie zum Beispiel Crash mit einem Hindernis, das aufgrund der Verschmutzung nicht erkannt werden konnte.

Gemäß einer beispielhaften Ausführungsform des Assistenzsystems umfasst der Lidar-Sensor eine Sender/Empfänger-Einheit und ein Sichtfenster, wobei die Sender/Empfänger-Einheit ausgebildet ist, einen Laserstrahl durch das Sichtfenser in die Umgebung des Fahrzeugs auszusenden, um die Umgebung des Fahrzeugs zu erkennen; und wobei der Mindestbereich einem Abstand der Sender/Empfänger-Einheit zu dem Sichtfenster des Lidar-Sensors inklusive einem vorgebbaren Toleranzbereich entspricht.

Der Abstand der Sender/Empfänger-Einheit zu dem Sichtfenster des Lidar-Sensors bezeichnet hier einen Mindestabstand, bis zu dem Objekte sich dem Fahrzeug nähern können, und von dem Lidar-Sensor erkannt werden. In der Nähe des Mindestabstands kann es sich um eine Verschmutzung des Sichtfensters handeln. Sinnvolle Abstandswerte für Objekte sind immer größer als der Mindestabstand zwischen Sichtfenster und Lidar-Sensor. Der Mindestabstand eignet sich daher gut als Mindestbereich für die Detektion eines zu nahen Hindernisses.

Gemäß einer beispielhaften Ausführungsform des Assistenzsystems ist die Steuerung ausgebildet, bei Erkennung einer Mehrzahl von zu nahen Hindernissen und/oder bei von dem Lidar-Sensor als ungültig klassifizierten Lasermessungen in dem zusammenhängenden Umgebungsbereich des Fahrzeugs eine Verschmutzung des Lidar-Sensors zu detektieren.

Neben der Erkennung von zu nahen Hindernissen, gibt es auch Lidar-Sensoren, die in diesem Fall die Lasermessungen als ungültig klassifizieren. Auch für diese Lidar-Sensoren kann eine Erkennung auf Verschmutzung, wie hier vorgestellt, implementiert werden.

Gemäß einem zweiten Aspekt der Erfindung wird die oben beschriebene Aufgabe gelöst durch ein Fahrzeug, umfassend: einen Lidar-Sensor, der ausgebildet ist, eine Umgebung des Fahrzeugs zu erfassen; und ein Assistenzsystem gemäß dem oben beschriebenen ersten Aspekt, das ausgebildet ist, bei Erkennung einer Mehrzahl von zu nahen Hindernissen in einem zusammenhängenden Umgebungsbereich des Fahrzeugs eine Verschmutzung des Lidar-Sensors zu detektieren.

Mit einem solchen Fahrzeug mit Lidar-Sensor und Assistenzsystem ist eine effiziente Überwachung des Lidar-Sensors des Fahrzeugs möglich, so dass Verschmutzungen automatisch erkannt und dem Benutzer angezeigt werden. Wird eine Verschmutzung vom Assistenzsystem des Fahrzeugs festgestellt, kann dieses den Benutzer über die Verschmutzung informieren, um ihn zu veranlassen, den Sensor zu reinigen und somit eine einwandfreie Funktion des Systems und ein ungestörtes Betreiben des Fahrzeugs durch den Benutzer oder Fahrer gewährleisten.

Gemäß einer beispielhaften Ausführungsform des Fahrzeugs ist das Fahrzeug ein Flurförderzeug.

Gerade bei Flurförderzeugen ist der Einsatz eines solchen Assistenzsystems mit Detektion der Verschmutzung des Lidar-Sensors vorteilhaft, damit der Fahrer die korrekten Informationen über die Entfernung zu möglichen Hindernissen erhält, um das Flurförderzeug unfallfrei führen zu können.

Gemäß einer beispielhaften Ausführungsform des Fahrzeugs umfasst der Lidar-Sensor eine rotierende Sender/Empfänger-Einheit oder eine feststehende Sender/Empfänger-Einheit.

Das Fahrzeug kann damit flexibel anhand von vorgegebenen Anforderungen mit dem geeigneten Lidar-Sensor ausgestattet werden.

Gemäß einem dritten Aspekt der Erfindung wird die oben beschriebene Aufgabe gelöst durch ein Verfahren zum Detektieren einer Verschmutzung eines Lidar-Sensors eines Fahrzeugs, das mit dem Lidar-Sensor zum Erkennen einer Umgebung des Fahrzeugs ausgestattet ist, wobei das Verfahren folgendes umfasst: Empfangen von Nutzdaten des Lidar-Sensors, wobei die Nutzdaten eine Mehrzahl von Lasermessungen umfassen, welche einen Abstand des Fahrzeugs zu einem oder mehreren Objekten in der Umgebung des Fahrzeugs anzeigen; Bestimmen für jede Lasermessung, ob der entsprechende Abstand des Fahrzeugs zu einem Objekt in der Umgebung des Fahrzeugs einen Mindestbereich unterschreitet, und Detektieren eines zu nahen Hindernisses bei Unterschreitung des Mindestbereichs; und Detektieren einer Verschmutzung des Lidar-Sensors bei Erkennung einer Mehrzahl von zu nahen Hindernissen in einem zusammenhängenden Umgebungsbereich des Fahrzeugs.

Mit einem solchen Verfahren ist eine effiziente Überwachung des Lidar-Sensors des Fahrzeugs möglich, so dass Verschmutzungen des Lidar-Sensors bzw. seines Sichtfensters automatisch erkannt und dem Benutzer angezeigt werden. Wird eine Verschmutzung des Sichtfensters festgestellt, kann der Benutzer über die Verschmutzung informiert werden, damit er entsprechende Reinigungs- oder Reparatur-Schritte veranlassen kann, um eine einwandfreie Funktion des Sensors zu gewährleisten.

Weitere Vorteile und Einzelheiten der Erfindung werden anhand der in den schematischen Figuren dargestellten Ausführungsbeispiele näher erläutert. Hierbei zeigen:
- Figur 1:: eine schematische Darstellung eines erfindungsgemäßen Assistenzsystems 200 für ein Fahrzeug 110 das mit einem Lidar-Sensor 120 ausgestattet ist;
- Figur 2:: eine schematische Darstellung des Sichtfelds des Lidar-Sensors 120 mit kritischen Verschmutzungen und unkritischen Verschmutzungen gemäß einem Beispiel;
- Figur 3:: eine schematische Darstellung des Sichtfelds des Lidar-Sensors 120 mit kritischen, nicht durchgehenden Verschmutzungen und unkritischen Verschmutzungen gemäß einem anderen Beispiel; und
- Figur 4:: eine schematische Darstellung eines erfindungsgemäßen Verfahrens 400 zum Detektieren einer Verschutzung des Lidar-Sensors 120 eines Fahrzeugs 110.

Die Figuren sind lediglich schematische Darstellungen und dienen nur der Erläuterung der Erfindung. Gleiche oder gleichwirkende Elemente sind durchgängig mit den gleichen Bezugszeichen versehen.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

In dieser Offenbarung werden Lidar-Sensoren beschrieben. Lidar (Light Detection and Ranging), auch Ladar, ist eine dem Radar verwandte Methode zur optischen Abstands- und Geschwindigkeitsmessung sowie zur Fernmessung atmosphärischer Parameter.

Es ist eine Form des dreidimensionalen Laserscanning. Statt der Radiowellen wie beim Radar werden Laserstrahlen verwendet. Lidar-Sensoren gibt es derzeit in zwei Bauformen: rotierend und fest. Bei rotierenden Lidar-Sensoren rotiert die Sender/Empfänger-Einheit und tastet die Umgebung ab. Bei festen Lidar-Sensoren sind die Sender/Empfänger-Einheiten feststehend.

Ein (einlagiger) Lidar-Sensor tastet seine Umgebung in einer horizontalen Lage mit a Abtastschritten ab. Es gibt auch mehrlagige Lidar-Sensoren, welche die Umgebung über e horizontale Lagen (Elevationen bzw. Ebenen) abtasten. Das Ergebnis ist eine Punktewolke (Point Cloud), bestehend aus n = a x e Punkten (Lasermessungen) pro Abtastschritt.

Bei Lidar-Sensoren werden Lasermessungen, die sich zu nah am Sensor befinden, als ungültig klassifiziert. Unter welchen Bedingungen das geschieht, ist den Handbüchern zu den Sensoren zu entnehmen.

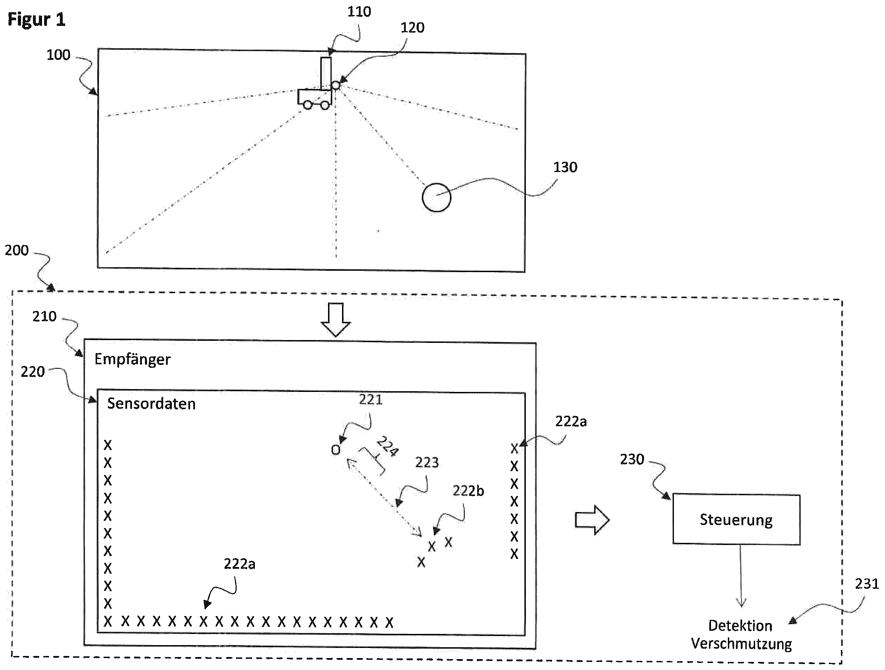

Figur 1 zeigt eine schematische Darstellung eines erfindungsgemäßen Assistenzsystems 200 für ein Fahrzeug 110 das mit einem Lidar-Sensor 120 ausgestattet ist.

Der Lidar-Sensor 120 dient zum Erkennen der Umgebung 100 des Fahrzeugs.

Das Assistenzsystem 200 umfasst: einen Empfänger 210 zum Empfang von Sensordaten bzw. Nutzdaten 220 des Lidar-Sensors 120. Die Nutzdaten 220 umfassen eine Mehrzahl von Lasermessungen 222a, 222b, wie in Figur 1 schematisch durch die Messpunkte "X" dargestellt, welche einen Abstand 223 des Fahrzeugs 110 zu einem oder mehreren Objekten 130 in der Umgebung 100 des Fahrzeugs 110 anzeigen. Die Position des Fahrzeugs 110 bzw. des Lidar-Sensors 120 ist dabei mit "O" 221 bezeichnet.

Das Assistenzsystem 200 umfasst: eine Steuerung 230, die ausgebildet ist, für jede Lasermessung 222a, 222b zu bestimmen, ob der entsprechende Abstand 223 des Fahrzeugs 110 zu einem Objekt 130 in der Umgebung 100 des Fahrzeugs 110 einen Mindestbereich 224 (in Figur 1 durch die geschweifte Klammer dargestellt) unterschreitet, und bei Unterschreitung des Mindestbereichs 224 ein zu nahes Hindernis zu detektieren.

Die Steuerung 230 ist ferner ausgebildet, bei Erkennung einer Mehrzahl von zu nahen Hindernissen in einem zusammenhängenden Umgebungsbereich 311, 312 des Fahrzeugs 110 eine Verschmutzung des Lidar-Sensors 120 zu detektieren 231.

Erkennt das Assistenzsystem 200 signifikante Verschmutzungen, kann es sofort Maßnahmen ergreifen, um negative Auswirkungen aufgrund der eingeschränkten Verfügbarkeit des Sensors 120 zu verhindern, zum Beispiel einen Warnhinweis, dass der Sensor verschmutzt ist und/oder ein Verringern der Geschwindigkeit des Fahrzeugs 110.

Somit kann sich die Funktion des Assistenzsystems 200 aufgrund unentdeckter Verschutzungen nicht mehr schleichend verschlechtern.

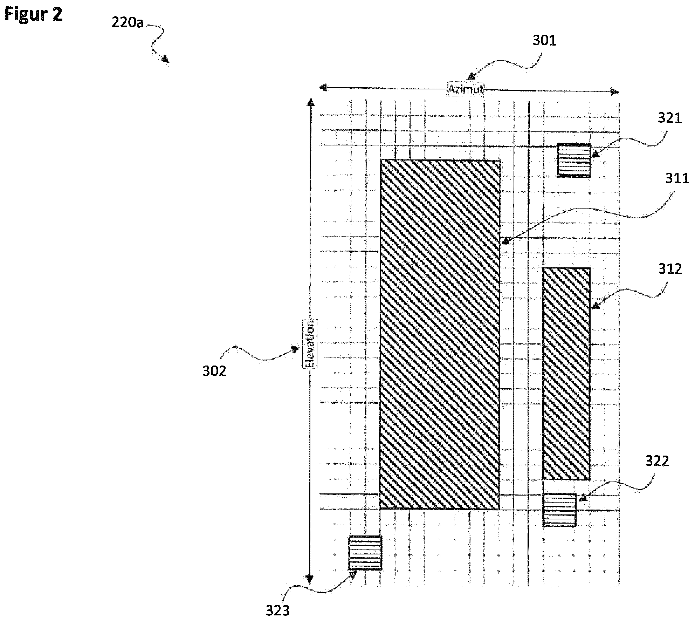

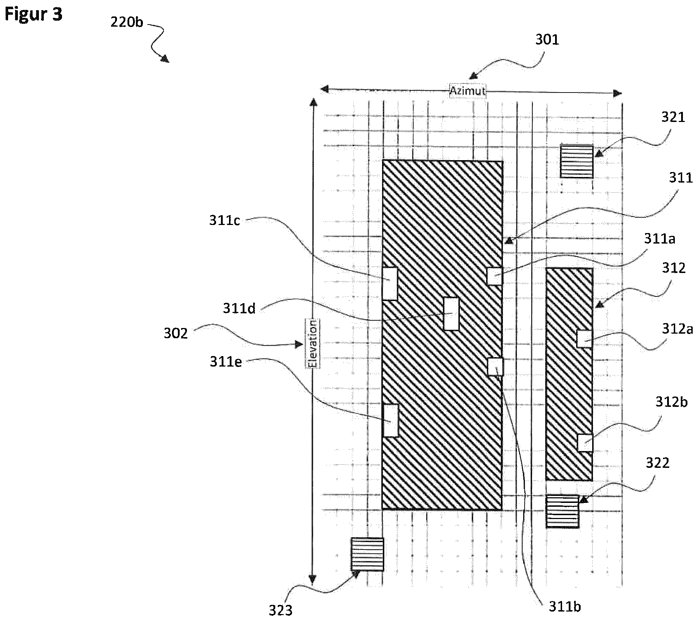

Die Nutzdaten 220 (wie in Figur 1 dargestellt) bzw. 220a oder 220b (wie in den Figuren 2 und 3 dargestellt) können eine Mehrzahl von Lasermessungen 222a, 222b bei verschiedenen Azimut-Winkeln 301 (siehe Figuren 2 und 3) und für jeden Azimut-Winkel 301 eine Mehrzahl von Lasermessungen 222a, 222b bei verschiedenen Elevation-Winkeln 302 (siehe ebenfalls Figuren 2 und 3) umfassen.

Der Azimut ist in der Astronomie eine der beiden Koordinaten, mit denen ein Punkt an der Himmelskugel im horizontalen Koordinatensystem verortet werden kann. Der ergänzende Vertikalwinkel über dem Horizont ist die Elevation. Gemeinsam beschreiben die beiden Winkel eine räumliche Blickrichtung. Der Azimutwinkel bezeichnet somit die horizontale Ausrichtung des Lidar-Sensors, im Gegensatz zur Elevation, die den vertikalen Winkel zwischen Horizont und Sensorausrichtung angibt.

Die Nutzdaten 220, 220a, 220b für einen Elevation-Winkel 302, insbesondere einem Winkel entsprechend einer Elevation von 0 Grad, umfassen eine Mehrzahl von Lasermessungen 222a, 222b bei verschiedenen Azimut-Winkeln 301, wie in den Figuren 2 und 3 dargestellt.

Der zusammenhängende Umgebungsbereich des Fahrzeugs 110 umfasst beispielsweise ein Feld einer vorgebbaren Anzahl n benachbarter Lasermessungen 222a, 222b. In den Figuren 2 und 3 sind beispielhaft die zusammenhängenden Umgebungsbereiche 311, 312, 321, 322 und 323 dargestellt.

Das Feld einer vorgebbaren Anzahl n benachbarter Lasermessungen 222a, 222b umfasst beispielsweise Folgendes: eine vorgebbare Anzahl e von Lasermessungen bei benachbarten Elevation-Winkeln 302 bei einer vorgebbaren Anzahl a von Lasermessungen bei benachbarten Azimut-Winkeln 301, wie beispielhaft in den Figuren 2 und 3 dargestellt.

Die Steuerung 230 kann ausgebildet sein, bei Erkennung einer Mehrzahl von zu nahen Hindernissen in einem zusammenhängenden Umgebungsbereich 321, 322, 323 (siehe Figuren 2 und 3) des Fahrzeugs 110, welche (Mehrzahl) geringer ist, als die vorgegebene Anzahl n des Felds benachbarter Lasermessungen 222a, 222b, eine unkritische Verschmutzung des Lidar-Sensors 120 zu detektieren 231.

Die Steuerung 230 kann ausgebildet sein, bei Detektion 231 einer Verschmutzung des Lidar-Sensors 120 einen Warnhinweis, dass der Lidar-Sensor 120 verschmutzt ist, anzuzeigen und/oder eine Geschwindigkeitsverringerung des Fahrzeugs 110 zu veranlassen.

Der Lidar-Sensor 120 umfasst beispielsweise eine Sender/Empfänger-Einheit und ein Sichtfenster. Die Sender/Empfänger-Einheit ist dabei ausgebildet, einen Laserstrahl durch das Sichtfenser in die Umgebung 100 des Fahrzeugs 110 auszusenden, um die Umgebung 100 des Fahrzeugs 110 zu erkennen. Der Mindestbereich 224 kann beispielsweise einem Abstand der Sender/Empfänger-Einheit zu dem Sichtfenster des Lidar-Sensors 120 inklusive eines vorgebbaren Toleranzbereichs entsprechen. Ein solcher Toleranzbereich kann beispielsweise 1%, 2%, 3%, 5% oder 10% des Abstands der Sender/Empfänger-Einheit zu dem Sichtfenster betragen oder Werte dazwischen.

Die Steuerung 230 kann ausgebildet sein, bei Erkennung einer Mehrzahl von zu nahen Hindernissen und/oder bei von dem Lidar-Sensor 120 als ungültig klassifizierten Lasermessungen in dem zusammenhängenden Umgebungsbereich 311, 312 (siehe Figuren 2 und 3) des Fahrzeugs 110 eine Verschmutzung des Lidar-Sensors 120 zu detektieren.

Das Assistenzsystem 200 kann neben der Steuerung 200 auch den Lidar-Sensor 120 umfassen. Das Assistenzsystem 200 kann in einem Fahrzeug eingesetzt werden, wie im Folgenden dargestellt.

Ein solches Fahrzeug 110 umfasst: einen Lidar-Sensor 120, der ausgebildet ist, eine Umgebung 100 des Fahrzeugs 110 zu erfassen; und ein Assistenzsystem 200 wie oben beschrieben, das ausgebildet ist, bei Erkennung einer Mehrzahl von zu nahen Hindernissen in einem zusammenhängenden Umgebungsbereich 311, 312 des Fahrzeugs 110 eine Verschmutzung des Lidar-Sensors 120 zu detektieren 231.

Das Fahrzeug 110 kann beispielsweise ein Flurförderzeug sein.

Als Flurförderzeug bezeichnet man alle gleislosen, gleisgebundenen oder spurgeführten Fahrzeuge, die innerbetrieblich für den Transport von Waren verwendet werden. Mitunter sind diese mit einer Einrichtung zum Heben und Stapeln von Lasten versehen, allerdings ist diese nicht zwingend notwendig.

Der Lidar-Sensor 120 kann eine rotierende Sender/Empfänger-Einheit oder eine feststehende Sender/Empfänger-Einheit umfassen.

Figur 2 zeigt eine schematische Darstellung des Sichtfelds des Lidar-Sensors 120 mit kritischen Verschmutzungen und unkritischen Verschmutzungen gemäß einem Beispiel.

Dargestellt sind hier kritische Verschmutzungen 311, 312 und unkritische Verschmutzungen 321, 322, 323.

Das Sichtfeld ist hier als rechteckiger Kasten dargestellt mit der X-Koordinate (Horizontal) Azimut und der Y-Koordinate (Vertikal) Elevation. Der rechteckige Kasten besteht aus einzelnen Kästchen, welche durch das Gitterfeld vorgegeben sind. Jedes einzelne Kästchen stellt eine Lasermessung dar. Figur 2 zeigt damit die Nutzdaten 220 des Lidar-Sensors 120 entsprechend der Darstellung in Figur 1.

Wie oben zu Figur 1 beschrieben, wird für jede Lasermessung ermittelt, ob diese Lasermessung ihren Mindestbereich unterschreitet, d.h., es gibt ein zu nahes Hindernis.

Wird in einem Feld von n benachbarten Lasermessungen, d.h., a benachbarten Azimut-Schritten jeweils auf e benachbarten Elevationen, eine signifikant hohe Anzahl m an Lasermessungen als "zu nah" erkannt, so liegt eine Verschmutzung bzw. Beschädigung des Sensors an dieser Stelle vor, in Figur 2 mit den Bezugszeichen 311 und 312 bezeichnet.

Dies entspricht der oben zu Figur 1 beschriebenen Funktion der Steuerung 230, welche ausgebildet ist, für jede Lasermessung 222a, 222b (siehe Figur 1) zu bestimmen, ob der entsprechende Abstand 223 des Fahrzeugs 110 zu einem Objekt 130 in der Umgebung 100 des Fahrzeugs 110 einen Mindestbereich 224 unterschreitet, und bei Unterschreitung des Mindestbereichs 224 ein zu nahes Hindernis zu detektieren. Bei Erkennung einer Mehrzahl von zu nahen Hindernissen in einem zusammenhängenden Umgebungsbereich 311, 312 des Fahrzeugs 110 wird eine Verschmutzung des Lidar-Sensors 120 detektiert 231.

Figur 3 zeigt eine schematische Darstellung des Sichtfelds des Lidar-Sensors 120 mit kritischen, nicht durchgehenden Verschmutzungen und unkritischen Verschmutzungen gemäß einem anderen Beispiel.

Die Funktionsweise der Steuerung 230 ist die gleiche wie oben zu Figur 1 beschrieben. Die kritischen Verschmutzungen 311, 312, sind hier in Figur 3, im Gegensatz zu Figur 2 nicht durchgehend, d.h., auf dem Sichtfenster befinden sich im Bereich der kritischen Verschmutzungen 311, 312 kleinere Stellen 311a, 311b, 311c, 311d, 311e bzw. 312a, 312b ohne Verschmutzung. Diese sind aber nicht ausschlaggebend, um das oben zu Figur genannte Kriterium nicht zu verletzen, wonach bei Erkennung einer Mehrzahl von zu nahen Hindernissen in einem zusammenhängenden Umgebungsbereich 311, 312 des Fahrzeugs 110 eine Verschmutzung (hier kritische Verschmutzung) des Lidar-Sensors 120 detektiert wird.

Kleinere Verschmutzungen, die das Sichtfeld des Sensors nicht wesentlich beeinträchtigen (in den Figuren 2 und 3 mit 321, 322, 323 bezeichnet) sind keine relevante Verschmutzung und werden vom Algorithmus bzw. der Steuerung 230 nicht als solche interpretiert.

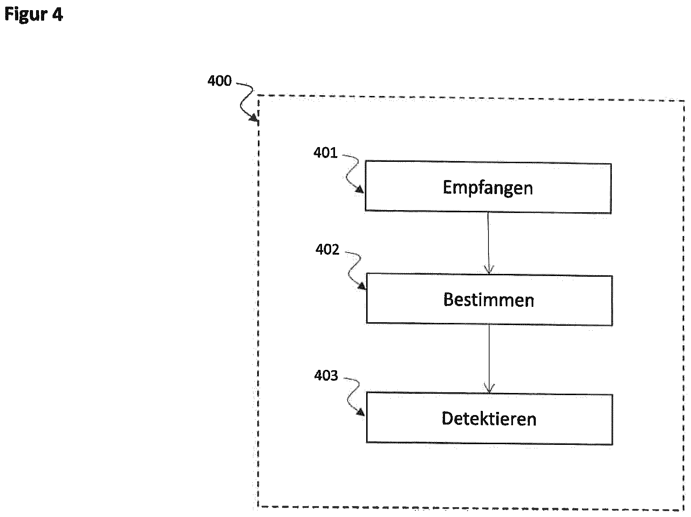

Figur 4 zeigt eine schematische Darstellung eines erfindungsgemäßen Verfahrens 400 zum Detektieren einer Verschutzung des Lidar-Sensors 120 eines Fahrzeugs 110, welches mit dem Lidar-Sensor 120 zum Erkennen einer Umgebung 100 des Fahrzeugs 110 ausgestattet ist, wie oben in Figur 1 näher dargestellt.

Das Verfahren 400 umfasst: Empfangen 401 von Nutzdaten 220 des Lidar-Sensors 120, wobei die Nutzdaten 220 eine Mehrzahl von Lasermessungen 222a, 222b umfassen, welche einen Abstand 223 des Fahrzeugs 110 zu einem oder mehreren Objekten 130 in der Umgebung 100 des Fahrzeugs 110 anzeigen, wie oben zu Figur 1 beschrieben.

Das Verfahren 400 umfasst: Bestimmen 402 für jede Lasermessung 222a, 222b, ob der entsprechende Abstand 223 des Fahrzeugs 110 zu einem Objekt 130 in der Umgebung 100 des Fahrzeugs 110 einen Mindestbereich 224 unterschreitet, und Detektieren eines zu nahen Hindernisses bei Unterschreitung des Mindestbereichs 224, wie oben zu Figur 1 beschrieben.

Das Verfahren 400 umfasst: Detektieren 403 einer Verschmutzung des Lidar-Sensors 120 bei Erkennung einer Mehrzahl von zu nahen Hindernissen in einem zusammenhängenden Umgebungsbereich 311, 312 des Fahrzeugs 110, wie oben zu Figur 1 beschrieben.

Ferner betrifft die Erfindung ein Computerprogramm zur Ausführung dieses Verfahrens 400 auf einem Computer, zum Beispiel einer Steuerung bzw. einem Steuerrechner des Fahrzeugs.

## Patentansprüche

1. Assistenzsystem (200) für ein Fahrzeug (110), das mit einem Lidar-Sensor (120) zum Erkennen einer Umgebung (100) des Fahrzeugs (110) ausgestattet ist, wobei das Assistenzsystem (200) folgendes umfasst:
einen Empfänger (210) zum Empfang von Nutzdaten (220) des Lidar-Sensors (120), wobei die Nutzdaten (220) eine Mehrzahl von Lasermessungen (222a, 222b) umfassen, welche einen Abstand (223) des Fahrzeugs (110) zu einem oder mehreren Objekten (130) in der Umgebung (100) des Fahrzeugs (110) anzeigen; und
eine Steuerung (230), die ausgebildet ist, für jede Lasermessung (222a, 222b) zu bestimmen, ob der entsprechende Abstand (223) des Fahrzeugs (110) zu einem Objekt (130) in der Umgebung (100) des Fahrzeugs (110) einen Mindestbereich (224) unterschreitet, und bei Unterschreitung des Mindestbereichs (224) ein zu nahes Hindernis zu detektieren;
wobei die Steuerung (230) ausgebildet ist, bei Erkennung einer Mehrzahl von zu nahen Hindernissen in einem zusammenhängenden Umgebungsbereich (311, 312) des Fahrzeugs (110) eine Verschmutzung des Lidar-Sensors (120) zu detektieren (231).

2. Assistenzsystem (200) nach Anspruch 1,
wobei die Nutzdaten (220, 220a, 220b) eine Mehrzahl von Lasermessungen (222a, 222b) bei verschiedenen Azimut-Winkeln (301) und für jeden Azimut-Winkel (301) eine Mehrzahl von Lasermessungen (222a, 222b) bei verschiedenen Elevation-Winkeln (302) umfassen.

3. Assistenzsystem (200) nach Anspruch 1,
wobei die Nutzdaten (220, 220a, 220b) für einen Elevation-Winkel (302), insbesondere einem Winkel entsprechend einer Elevation von 0 Grad, eine Mehrzahl von Lasermessungen (222a, 222b) bei verschiedenen Azimut-Winkeln (301) umfassen.

4. Assistenzsystem (200) nach Anspruch 2 oder 3,
wobei der zusammenhängende Umgebungsbereich des Fahrzeugs (110) ein Feld einer vorgebbaren Anzahl n benachbarter Lasermessungen (222a, 222b) umfasst.

5. Assistenzsystem (200) nach Anspruch 4,
wobei das Feld einer vorgebbaren Anzahl n benachbarter Lasermessungen (222a, 222b) Folgendes umfasst: eine vorgebbare Anzahl e von Lasermessungen bei benachbarten Elevation-Winkeln (302) bei einer vorgebbaren Anzahl a von Lasermessungen bei benachbarten Azimut-Winkeln (301).

6. Assistenzsystem (200) nach Anspruch 4 oder 5,
wobei die Steuerung (230) ausgebildet ist, bei Erkennung einer Mehrzahl von zu nahen Hindernissen in einem zusammenhängenden Umgebungsbereich (321, 322, 323) des Fahrzeugs (110), welche geringer ist, als die vorgegebene Anzahl n des Felds benachbarter Lasermessungen (222a, 222b), eine unkritische Verschmutzung des Lidar-Sensors (120) zu detektieren (231).

7. Assistenzsystem (200) nach einem der vorstehenden Ansprüche,
wobei die Steuerung (230) ausgebildet ist, bei Detektion (231) einer Verschmutzung des Lidar-Sensors (120) einen Warnhinweis, dass der Lidar-Sensor (120) verschmutzt ist, anzuzeigen und/oder eine Geschwindigkeitsverringerung des Fahrzeugs (110) zu veranlassen.

8. Assistenzsystem (200) nach einem der vorstehenden Ansprüche,
wobei der Lidar-Sensor (120) eine Sender/Empfänger-Einheit und ein Sichtfenster umfasst, wobei die Sender/Empfänger-Einheit ausgebildet ist, einen Laserstrahl durch das Sichtfenser in die Umgebung (100) des Fahrzeugs (110) auszusenden, um die Umgebung (100) des Fahrzeugs (110) zu erkennen;
wobei der Mindestbereich (224) einem Abstand der Sender/Empfänger-Einheit zu dem Sichtfenster des Lidar-Sensors (120) inklusive einem vorgebbaren Toleranzbereich entspricht.

9. Assistenzsystem (200) nach einem der vorstehenden Ansprüche,
wobei die Steuerung (230) ausgebildet ist, bei Erkennung einer Mehrzahl von zu nahen Hindernissen und/oder bei von dem Lidar-Sensor (120) als ungültig klassifizierten Lasermessungen in dem zusammenhängenden Umgebungsbereich (311, 312) des Fahrzeugs (110) eine Verschmutzung des Lidar-Sensors (120) zu detektieren (231).

10. Fahrzeug (110), umfassend:
einen Lidar-Sensor (120), der ausgebildet ist, eine Umgebung (100) des Fahrzeugs (110) zu erfassen; und
ein Assistenzsystem (200) nach einem der vorstehenden Ansprüche, das ausgebildet ist, bei Erkennung einer Mehrzahl von zu nahen Hindernissen in einem zusammenhängenden Umgebungsbereich (311, 312) des Fahrzeugs (110) eine Verschmutzung des Lidar-Sensors (120) zu detektieren (231).

11. Fahrzeug (110) nach Anspruch 10,
welches ein Flurförderzeug ist.

12. Fahrzeug (110) nach Anspruch 10 oder 11,
wobei der Lidar-Sensor (120) eine rotierende Sender/Empfänger-Einheit oder eine feststehende Sender/Empfänger-Einheit umfasst.

13. Verfahren (400) zum Detektieren einer Verschmutzung eines Lidar-Sensors (120) eines Fahrzeugs (110), das mit dem Lidar-Sensor (120) zum Erkennen einer Umgebung (100) des Fahrzeugs (110) ausgestattet ist, wobei das Verfahren (400) folgendes umfasst:
Empfangen (401) von Nutzdaten (220) des Lidar-Sensors (120), wobei die Nutzdaten (220) eine Mehrzahl von Lasermessungen (222a, 222b) umfassen, welche einen Abstand (223) des Fahrzeugs (110) zu einem oder mehreren Objekten (130) in der Umgebung (100) des Fahrzeugs (110) anzeigen; und
Bestimmen (402) für jede Lasermessung (222a, 222b), ob der entsprechende Abstand (223) des Fahrzeugs (110) zu einem Objekt (130) in der Umgebung (100) des Fahrzeugs (110) einen Mindestbereich (224) unterschreitet, und Detektieren eines zu nahen Hindernisses bei Unterschreitung des Mindestbereichs (224);
Detektieren (403) einer Verschmutzung des Lidar-Sensors (120) bei Erkennung einer Mehrzahl von zu nahen Hindernissen in einem zusammenhängenden Umgebungsbereich (311, 312) des Fahrzeugs (110).
